(19) Europäisches Patentamt
European Patent Office
Office européen des brevets

(11) **EP 4 036 861 A2**

(12) **EUROPEAN PATENT APPLICATION**

(43) Date of publication:
**03.08.2022 Bulletin 2022/31**

(51) International Patent Classification (IPC):
*G06T 9/00* (2006.01)

(21) Application number: **22163905.7**

(52) Cooperative Patent Classification (CPC):
**G06T 9/001**

(22) Date of filing: **23.03.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.04.2021 CN 202110396772**

(71) Applicant: **Apollo Intelligent Connectivity (Beijing) Technology Co., Ltd.**
**Beijing 100176 (CN)**

(72) Inventor: **Ma, Wei**
**Beijing, 100176 (CN)**

(74) Representative: **FRKelly**
**27 Clyde Road**
**Dublin D04 F838 (IE)**

(54) **METHOD AND APPARATUS FOR PROCESSING POINT CLOUD DATA, ELECTRONIC DEVICE, STORAGE MEDIUM, COMPUTER PROGRAM PRODUCT**

(57) The present disclosure provides a method and apparatus for processing point cloud data, an electronic device, a storage medium and a computer program product, and relates to the field of intelligent transportation and perception data processing. The method includes: acquiring a target node, located in a target layer, obtained after blocking processing is performed on coordinate points in the point cloud data, wherein the target node includes a plurality of coordinate points; acquiring related information of all the coordinate points of the target node; determining a target coordinate point based on the related information of the coordinate points of the target node and a total number of the coordinate points of the target node; and replacing all the coordinate points of the target node with the target coordinate point, to realize dilution processing on the point cloud data.

S101

acquiring a target node, located in a target layer, obtained after blocking processing is performed on coordinate points in the point cloud data, wherein the target node includes a plurality of coordinate points

S102

acquiring related information of all the coordinate points of the target node

S103

determining a target coordinate point based on the related information of the coordinate points of the target node and a total number of the coordinate points of the target node

S104

replacing all the coordinate points of the target node with the target coordinate point, to realize dilution processing on the point cloud data

**FIG. 1**

**Description**

**TECHNICAL FIELD**

The present disclosure relates to the technical field of data processing, and in particular to the technical field of intelligent transportation and perception data processing.

**BACKGROUND**

In recent years, point cloud technologies have become increasingly mature, related applications have presented a diversified trend. However, large data volume, point redundancy, etc. of laser point cloud lead to slow data processing speed and large space occupation during application. Therefore, how to perform simplified dilution on point cloud data becomes one of key problems in point cloud data processing.

**SUMMARY**

The present disclosure provides a method and apparatus for processing point cloud data, a device and a storage medium.

According to one aspect of the present disclosure, there is provided a method for processing point cloud data, including:

acquiring a target node, located in a target layer, obtained after blocking processing is performed on coordinate points in the point cloud data, wherein the target node includes a plurality of coordinate points;

acquiring related information of all the coordinate points of the target node;

determining a target coordinate point based on the related information of the coordinate points of the target node and a total number of the coordinate points of the target node; and

replacing all the coordinate points of the target node with the target coordinate point, to realize dilution processing on the point cloud data.

According to another aspect of the present disclosure, there is provided an apparatus for processing point cloud data, including:

a target node determination unit configured for acquiring a target node, located in a target layer, obtained after blocking processing is performed on coordinate points in the point cloud data, wherein the target node includes a plurality of coordinate points;

a related information acquisition unit configured for acquiring related information of all the coordinate points of the target node;

a target coordinate point determination unit configured for determining a target coordinate point based on the related information of the coordinate points of the target node and a total number of the coordinate points of the target node; and

a dilution processing unit configured for replacing all the coordinate points of the target node with the target coordinate point, to realize dilution processing on the point cloud data.

According to another aspect of the present disclosure, there is provided an electric device, including:

at least one processor; and

a memory communicatively connected with the at least one processor,

wherein the memory stores instructions executable by the at least one processor, and the instructions, when executed by the at least one processor, enable the at least one processor to perform the method in any embodiment of the present disclosure.

According to another aspect of the present disclosure, there is provided a non-transitory computer-readable storage medium storing computer instructions, wherein the computer instructions, when executed by a computer, cause the computer to perform the method in any embodiment of the present disclosure.

According to another aspect of the present disclosure, there is provided a computer program product including a computer program, wherein the computer program, when executed by a processor, implements the method in any embodiment of the present disclosure.

According to the solution of the present disclosure, the simplified dilution is performed on the point cloud data, thereby laying a foundation for improving the data processing speed of the point cloud data during application and reducing the space occupation.

It should be understood that the content described in this section is neither intended to limit the key or important features of the embodiments of the present disclosure, nor intended to limit the scope of the present disclosure. Other features of the present disclosure will be readily understood through the following description.

## BRIEF DESCRIPTION OF THE DRAWINGS

The drawings are used to better understand the solution and do not constitute a limitation to the present disclosure. In which:

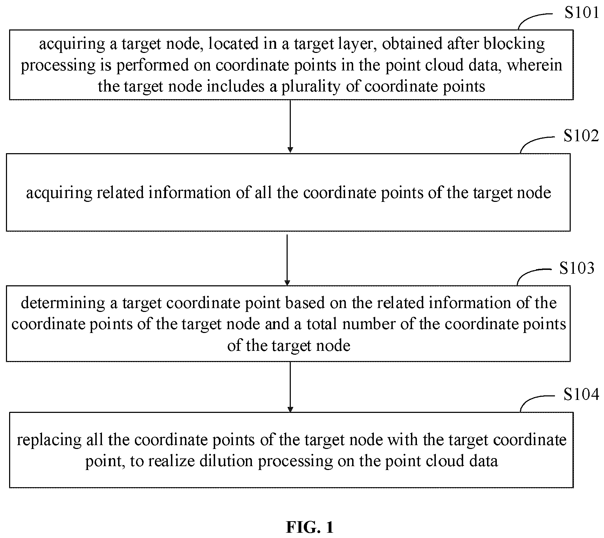

FIG. 1 is a schematic diagram of a method for processing point cloud data according to an embodiment of the present disclosure;
FIG. 2 is a schematic diagram of a blocking manner of the method for processing point cloud data according to an embodiment of the present disclosure in a specific example;
FIG. 3 is a schematic diagram of coordinate point replacement of the method for processing point cloud data according to an embodiment of the present disclosure in a specific example;
FIG. 4 is a structural block diagram of an apparatus for processing point cloud data according to an embodiment of the present disclosure; and
FIG. 5 is a block diagram of an electronic device configured to implement the method for processing point cloud data according to an embodiment of the present disclosure.

## DETAILED DESCRIPTION

Exemplary embodiments of the present disclosure are described below in combination with the drawings, including various details of the embodiments of the present disclosure to facilitate understanding, which should be considered as exemplary only. Thus, those of ordinary skill in the art should realize that various changes and modifications may be made to the embodiments described herein without departing from the scope and spirit of the present disclosure. Likewise, descriptions of well-known functions and structures are omitted in the following description for clarity and conciseness.

The scheme of the present disclosure provides a method for processing point cloud data, including:

S101, acquiring a target node, located in a target layer, obtained after blocking processing is performed on coordinate points in the point cloud data, wherein the target node includes a plurality of coordinate points. Herein, in a practical application, there may be one or more (i.e., two or more) target nodes in the target layer, which is not limited by the scheme of the present disclosure. Each target node in the target layer may be processed based on the scheme of the present disclosure, so as to realize dilution processing on the point cloud data.

S102, acquiring related information of all the coordinate points of the target node;

S103, determining a target coordinate point based on the related information of the coordinate points of the target node and a total number of the coordinate points of the target node; and

S104, replacing all the coordinate points of the target node with the target coordinate point, to realize dilution processing on the point cloud data.

Herein, the point cloud data refers to a set of vectors in a three-dimensional coordinate system and the related information of points or coordinate points in the point cloud data includes three-dimensional coordinates, and in a practice application, the related information may further include color information or reflection intensity information (hereinafter referred to as reflection intensity). In a practical application, the point cloud data in the scheme of the present disclosure may specifically include laser point cloud data.

Thus, the scheme of the present disclosure can determine the target coordinate point based on the related information of all the coordinate points in the target node, and replace all the coordinate points in the target node with the target coordinate points, thereby reserving characteristics of the original coordinate points maximally while realizing dilution processing.

In a specific example of the scheme of the present disclosure, the blocking processing is performed on at least one of a plurality of obtained initial nodes by using the following manner. Specifically, the blocking processing is performed on the coordinate points in the point cloud data based on a preset blocking rule, to obtain a plurality of initial nodes in an initial layer (i.e., first layer). Further, after initial blocking is completed, further hierarchical processing is performed on the initial nodes, to achieve the purpose of layer-by-layer blocking processing. Specifically, the blocking processing is continued to be performed on coordinate points of at least one of the plurality of initial nodes, to obtain nodes in a next layer, and nodes in an i-th layer are obtained in a case where the blocking processing is performed repeatedly, wherein i is a positive integer greater than or equal to 1; and nodes in the last layer are obtained until a preset blocking termination condition is met. Thus, layer-by-layer blocking is performed on the original point cloud data, thereby laying a foundation for dilution processing.

Herein, the initial node includes a plurality of coordinate points, a coordinate point, or no coordinate point, and the number of coordinate points in different initial nodes may be the same or different, which is not limited by the scheme of the present disclosure. In a practical application, in order to improve the blocking processing efficiency, after the initial nodes are obtained, next-level blocking processing is only performed on the initial nodes with the number of the coordinate points greater than or equal to a preset threshold value, and is not performed on the initial nodes with the number of the coordinate points less than the preset threshold value any more, that is, the "continuing to perform the blocking processing on coordinate points of at least one of the plurality of initial nodes" specifically includes: continuing to perform the blocking processing on the initial nodes with the number of the coordinate points greater than or equal to the preset threshold value.

In a specific example of the scheme of the present disclosure, the target layer is the last layer. That is, the target layer is the lowest layer after layer-by-layer blocking processing, thereby laying a foundation for dilution processing.

In a specific example of the scheme of the present disclosure, blocking processing is performed by using the following manner specifically including: determining a first number of nodes, located in a next layer, required to be obtained after the blocking processing is performed on the nodes in the i-th layer; and on this basis, the nodes in the i-th layer are obtained by using the following manner specifically including: performing the blocking processing on coordinate points of nodes in an (i-1)-th layer, to obtain the nodes in the i-th layer, wherein a number of the nodes, in the i-th layer, obtained after the blocking processing is performed on the nodes in the (i-1)-th layer is equal to the first number, that is, the number of the nodes, in the i-th layer, obtained after blocking processing is equal to the first number.

It should be noted herein that in a practical application, a blocking number is indicated in the used preset blocking rule, and in such a condition, in a case where the first number is less than or equal to the blocking number in the preset blocking rule, coordinate points in the nodes in the i-th layer are blocked into the first number of child nodes, that is, the coordinate points in the nodes in the i-th layer are blocked into the first number of nodes in a next layer; and in a case where the first number is greater than the blocking number in the preset blocking rule, the coordinate points in the nodes in the i-th layer are blocked into the blocking number of child nodes in the preset blocking rule. In other words, the number of the nodes, in the i-th layer, obtained after the blocking processing is performed the nodes in the (i-1)-th layer is related to the first number and the blocking number indicated in the preset blocking rule.

Thus, the first number of nodes in a next layer required to be obtained after the blocking processing is performed on the nodes in the i-th layer may be fully considered, and the blocking processing of the nodes in the next layer are realized based on the first number, thereby laying a foundation for improving the blocking processing efficiency and avoiding invalid blocking processing.

In a specific example of the scheme of the present disclosure, the first number of nodes, located in the next layer, required to be obtained after the blocking processing is performed on the nodes in the i-th layer is determined by using the following manner specifically including: acquiring a number of coordinate points of the nodes in the i-th layer, and acquiring a number of coordinate points of parent nodes of the nodes in the i-th layer; acquiring a second number of nodes, located in the next layer, required to be obtained after the blocking processing is performed on the parent nodes of the nodes in the i-th layer; and calculating the first number based on the number of the coordinate points of the nodes in the i-th layer, the number of the coordinate points of the parent nodes of the nodes in the i-th layer, and the second number. Thus, the first number of nodes in a next layer obtained after the blocking processing is performed on the nodes in the i-th layer may be fully considered, and the first number is related to the number of the coordinate points in the nodes in the i-th layer, the number of the coordinate points in the parent nodes of the nodes in the i-th layer and the second number of nodes in a next layer obtained after the blocking processing is performed on the parent nodes, thereby fully considering relevant factors, and laying a foundation for improving the blocking processing efficiency and avoiding invalid blocking processing.

Herein, the parent node refers to a node that has at least one child node directly belonging to the same. For example, the blocking processing is performed on a node A in the i-th layer, to obtain a plurality of nodes B in a next layer, the nodes B obtained after blocking processing may be referred to as child nodes of the node A, and the node A may be referred to as the parent node of the nodes B.

In a specific example of the scheme of the present disclosure, the calculating the first number based on the number of the coordinate points of the nodes in the i-th layer, the number of the coordinate points of the parent nodes of the nodes in the i-th layer, and the second number includes: obtaining a first characteristic value based on the number of the coordinate points of the nodes in the i-th layer and the number of the coordinate points of the parent nodes of the nodes in the i-th layer; and obtaining the first number based on the first characteristic value and the second number.

For example, the number $N_i$ of segments required by each node in the i-th layer (i.e., the first number) may be obtained based on the following equation:

$$N_i = \frac{P_i}{P_r} \times N_r ,$$

wherein $P_r$ refers to the number of coordinate points in parent nodes of current nodes in the i-th layer; $P_i$ represents the number of coordinate points in the current nodes in the i-th layer; and $N_r$ represents the number of segments required by the parent nodes of the current nodes in the i-th layer (i.e., the second number).

Thus, in a case where the number of child nodes obtained by blocks required by nodes in a next layer is determined, the number of blocks of the parent nodes of the nodes, the number of coordinate points of the current nodes and the number of coordinate points of the parent nodes of the current nodes are fully considered, thus, in a case where the number of blocks required by the parent nodes is small and even the number of the required blocks is 0, the characteristic can be conducted to a next level, thereby avoiding invalid blocking of the next level. Thus, the blocking processing speed of the scheme of the present disclosure is faster.

In a specific example of the scheme of the present disclosure, the determining the target coordinate point based on the related information of the coordinate points of the target node and the total number of the coordinate points of the target node includes: obtaining an average reflection intensity $f(I)$ based on reflection intensities of all the coordinate points of the target node and the total number of the coordinate points of the target node, such as

$$f(I) = \sum_{n=1}^{p}(I_n)/p,$$

wherein $I_n$ represents the reflection intensity of the coordinate point n, and $p$ represents the total number of points in the node in which coordinate point n is located; and

further determining target coordinate information based on coordinate information and the reflection intensities of all the coordinate points of the target node, the average reflection intensity, a preset maximum reflection intensity and a preset minimum reflection intensity, to obtain the target coordinate point. Thus, the reflection intensity of each coordinate point in the target node and the weight proportion of the number of point clouds are fully considered, such that obtained target coordinate points maximally reserve valuable information.

In a specific example of the scheme of the present disclosure, the determining the target coordinate information based on the coordinate information and the reflection intensities of all the coordinate points of the target node, the average reflection intensity, the preset maximum reflection intensity and the preset minimum reflection intensity, to obtain the target coordinate point specifically includes: obtaining a second characteristic value based on differences between the reflection intensities of the coordinate points of the target nodes and the preset minimum reflection intensity and a difference between the preset maximum reflection intensity and the preset minimum reflection intensity; obtaining a third characteristic value based on the average reflection intensity and the difference between the preset maximum reflection intensity and the preset minimum reflection intensity; and obtaining the target coordinate information based on the second characteristic value, the third characteristic value and the coordinate information of all the coordinate points of the target node.

For example, the target coordinate point may be obtained by using the following manner specifically including:

X-axis coordinate information

$$f(x) = \sum_{n=1}^{p} \left(\frac{I_n - I_{min}}{I_{max} - I_{min}}\right) \times x_n \Big/ \left(p \times \frac{f(I)}{I_{max} - I_{min}}\right),$$

wherein $I_n$ represents the reflection intensity of the coordinate point n; $I_{max}$ represents an interval maximum of the reflection intensity, that is, a preset maximum reflection intensity; $I_{min}$ represents an interval minimum of the reflection intensity, that is, a preset minimum reflection intensity; $x_n$ represents an x-axis coordinate of the coordinate point n; and $p$ represents the total number of points of the node in which the coordinate point n is located;

Y-axis coordinate information

$$f(y) = \sum_{n=1}^{p} \left( \frac{I_n - I_{min}}{I_{max} - I_{min}} \right) \times y_n \bigg/ \left( p \times \frac{f(I)}{I_{max} - I_{min}} \right),$$

wherein $I_n$ represents the reflection intensity of the coordinate point n; $I_{max}$ represents the interval maximum of the reflection intensity, that is, the preset maximum reflection intensity; $I_{min}$ represents the interval minimum of the reflection intensity, that is, the preset minimum reflection intensity; $y_n$ represents a y-axis coordinate of the coordinate point n; and $p$ represents the total number of points of the node in which the coordinate point n is located; and

Z-axis coordinate information

$$f(z) = \sum_{n=1}^{p} \left( \frac{I_n - I_{min}}{I_{max} - I_{min}} \right) \times z_n \bigg/ \left( p \times \frac{f(I)}{I_{max} - I_{min}} \right),$$

wherein $I_n$ represents the reflection intensity of the coordinate point n; $I_{max}$ represents the interval maximum of the reflection intensity, that is, the preset maximum reflection intensity; $I_{min}$ represents the interval minimum of the reflection intensity, that is, the preset minimum reflection intensity; $z_n$ represents a z-axis coordinate of the coordinate point n; and $p$ represents the total number of points of the node in which the coordinate point n is located.

Thus, the scheme of the present disclosure can determine the target coordinate points based on the related information of all the coordinate points in the target nodes, and replace all the coordinate points in the target nodes with the target coordinate points, thereby reserving characteristics of the original coordinate points maximally while realizing dilution processing.

The scheme of the present disclosure is further described in detail in combination with a specific example. Specifically, the example uses a preset blocking rule. For example, the blocking processing is performed on point cloud data by means of an octree manner. Specifically, a preset blocking termination condition is set, that is, the target total number of nodes N after octree blocking processing is set, in a case where the total number of nodes obtained after blocking processing is equal to the target total number of nodes N, blocking processing is stopped to obtain nodes of the last layer; or, in a case where the total number of nodes obtained after blocking processing is greater than the target total number of nodes N, blocking processing is stopped to obtain the nodes of the last layer.

In a practical application, the target total number of nodes N may be related with a dilution processing coefficient and the total number of points in the point cloud data (i.e., the total number of coordinate points in the point cloud data), for example, $N = f \times P_0$, wherein

$f$ represents the dilution processing coefficient, of which the value ranges from 0 to 1, and $P_0$ represents the total number of points of the point cloud data.

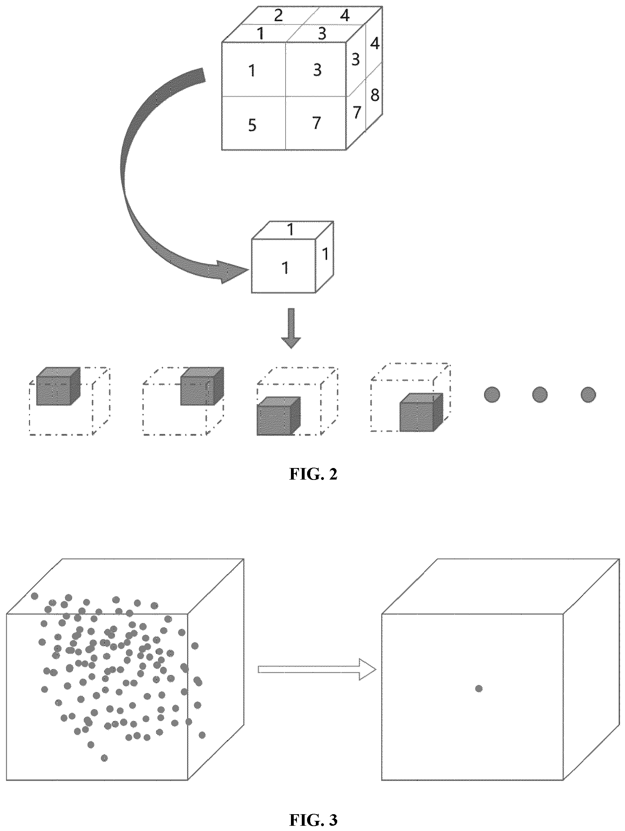

Further, as shown in FIG. 2, octree segmentation is performed on the point cloud data, that is, the blocking processing is performed on coordinate points in the point cloud data, to obtain a plurality of initial nodes in an initial layer. Herein, the total number of the initial nodes is eight due to a used octree segmentation manner. Further, octree segmentation continues being performed on the initial nodes to obtain nodes in a next layer (also referred to as child nodes in the next layer) until a preset blocking termination condition is met.

In the example, before performing segmentation processing, the number of blocks (also referred to as number) required to be segmented of each node in the next layer requires to be calculated. Specifically, the calculation equation is as follows:

the number of segments required by each node in the i-th layer (i.e., the first number) $N_i$ may be obtained based on the following equation:

$$N_i = \frac{P_i}{P_r} \times N_r,$$

wherein $P_r$ refers to the number of coordinate points in parent nodes of current nodes in the i-th layer; $P_i$ represents the number of coordinate points in the current nodes in the i-th layer; and $N_r$ represents the number of segments required by the parent nodes of the current nodes in the i-th layer.

For example, $P_0$=10000, the dilution processing coefficient is 10%, and in such a condition, the target total number of nodes N=10000×0.1=1000. Octree blocking is performed on the point cloud data, that is, octree blocking is performed on 10000 coordinate points to obtain eight initial nodes, a current layer is recorded as the first layer, and the eight initial nodes are recorded as $N_{0-1}$, $N_{0-2}$, $N_{0-3}$, $N_{0-4}$, $N_{0-5}$, $N_{0-6}$, $N_{0-7}$ and $N_{0-8}$ respectively, wherein there may be one or more coordinate points in the initial nodes, or there may be no coordinate point in the initial nodes, which is not limited by the scheme of the present disclosure.

Further, octree blocking is performed on the initial nodes to obtain nodes in a next layer, that is, nodes in a second layer. Herein, it is described by taking $N_{0-1}$ for further octree blocking as an example that

the number of child nodes in a next layer, i.e. nodes of the second layer, required to be obtained by the initial node $N_{0-1}$ is calculated, which is recorded as $N_1$, and the equation is as follows:

$$N_1 = \frac{P_1}{P_0} \times N_0,$$

wherein $P_0$ refers to the number of coordinate points in a parent node of a current node (i.e., the initial node $N_{0-1}$) in the first layer; $P_1$ represents the number of coordinate points in the current node in the first layer; and $N_0$ represents the number of segments required by the parent node of the current node in the first layer, wherein $N_0 = 10000 \times 0.1 = 1000$.

In a practical application, in a case where a calculation result $N_1$ is greater than the blocking number in the preset blocking rule, for example, for the example, in a case where $N_1$ is greater than 8, next-level blocking processing is performed according to the blocking number in the preset blocking rule, and in a case where $N_1$ is less than or equal to 8, next-level blocking processing is performed based on $N_1$. In other words, in a case where it is determined that a first number of nodes, located in a next layer, required to be obtained after the blocking processing is performed on the nodes in the i-th layer is less than or equal to the blocking number in the preset blocking rule, coordinate points in the nodes in the i-th layer are blocked into the first number of child nodes, that is, the coordinate points in the nodes in the i-th layer are blocked into the first number of nodes in a next layer; and in a case where the first number is greater than the blocking number in the preset blocking rule, the coordinate points in the nodes in the i-th layer are blocked into the blocking number of child nodes in the preset blocking rule.

Further, in a case where the calculation result $N_1$ is greater than 8, next-level blocking processing is performed according to the blocking number in the preset blocking rule, that is, $N_{0-1}$ continues being blocked into eight nodes, which is recorded as a second layer, and the eight nodes in the second layer are $N_{1-1}$, $N_{1-2}$, $N_{1-3}$, $N_{1-4}$, $N_{1-5}$, $N_{1-6}$, $N_{1-7}$ and $N_{1-8}$ respectively. Herein, there may be one or more coordinate points in the second layer, or there may be no coordinate point in the nodes in the second layer, which is not limited by the scheme of the present disclosure.

It should be noted that other initial nodes in the first layer all may be blocked based on the above manner, which is not described herein.

Further, it is described by taking $N_{1-1}$ for further octree blocking as an example that the blocking processing may also be further performed on other nodes in the second layer in a manner similar to that of $N_{1-1}$. Specifically,

the number of child nodes in a next layer, i.e., nodes in a third layer required to be obtained by node $N_{1-1}$ is calculated, which is recorded as $N_2$, and the equation is as follows:

$$N_2 = \frac{P_2}{P_1} \times N_1,$$

wherein $P_1$ refers to the number of coordinate points in a parent node of a current node (i.e., node $N_{1-1}$) in the second layer; $P_2$ represents the number of coordinate points in the current node in the second layer; and $N_1$ represents the number of segments required by the parent node of the current node in the second layer.

Thus, in a case where the number of blocks required by nodes in a next layer is determined, the number of blocks of the parent nodes of the nodes is fully considered, thus, in a case where the number of blocks required by the parent nodes is small and even the number of the required blocks is 0, the characteristic can be conducted to a next level, thereby avoiding invalid blocking of the next level. Thus, the blocking processing speed of the scheme of the present disclosure is faster.

In a practical application, blocking is performed layer by layer based on the above blocking manner until the preset blocking termination condition is met to obtain the nodes in the last layer, that is, the nodes are deeply segmented to the bottommost layer.

Herein, after the nodes are deeply segmented to the bottommost layer node, as shown in FIG. 3, target coordinate points corresponding to the bottommost layer node is determined according to a weighted gravity center method, and the target coordinate points represent all coordinate points in the bottommost layer node, thereby achieving dilution processing. Herein, in the example, coordinate information and reflection intensity of the target coordinate points are both jointly determined by all the coordinate points in the bottommost layer node, thus the scheme of the present disclosure can fully consider the weight proportion of the reflection intensity and the number of point clouds, and reserve valuable information. Specifically, the target coordinate point may be specifically determined by using the following algorithmic equation:

average reflection intensity $f(I) = \sum_{n=1}^{p}(I_n)/p$ ,

wherein $I_n$ represents the reflection intensity of the coordinate point n, and $p$ represents the total number of points in the node in which the coordinate point n is located;

X-axis coordinate information

$$f(x) = \sum_{n=1}^{p}\left(\frac{I_n - I_{min}}{I_{max} - I_{min}}\right) \times x_n \bigg/ \left(p \times \frac{f(I)}{I_{max} - I_{min}}\right),$$

wherein $I_n$ represents the reflection intensity of the coordinate point n; $I_{max}$ represents an interval maximum of the reflection intensity, that is, a preset maximum reflection intensity; $I_{min}$ represents an interval minimum of the reflection intensity, that is, a preset minimum reflection intensity; $x_n$ represents an x-axis coordinate of the coordinate point n; and $p$ represents the total number of points of the node in which the coordinate point n is located;

Y-axis coordinate information

$$f(y) = \sum_{n=1}^{p}\left(\frac{I_n - I_{min}}{I_{max} - I_{min}}\right) \times y_n \bigg/ \left(p \times \frac{f(I)}{I_{max} - I_{min}}\right),$$

wherein $I_n$ represents the reflection intensity of the coordinate point n; $I_{max}$ represents the interval maximum of the reflection intensity, that is, the preset maximum reflection intensity; $I_{min}$ represents the interval minimum of the reflection intensity, that is, the preset minimum reflection intensity; $y_n$ represents a y-axis coordinate of the coordinate point n; and $p$ represents the total number of points of the node in which the coordinate point n is located; and

Z-axis coordinate information

$$f(z) = \sum_{n=1}^{p}\left(\frac{I_n - I_{min}}{I_{max} - I_{min}}\right) \times z_n \bigg/ \left(p \times \frac{f(I)}{I_{max} - I_{min}}\right),$$

wherein $I_n$ represents the reflection intensity of the coordinate point n; $I_{max}$ represents the interval maximum of the reflection intensity, that is, the preset maximum reflection intensity; $I_{min}$ represents the interval minimum of the reflection intensity, that is, the preset minimum reflection intensity; $z_n$ represents a z-axis coordinate of the coordinate point n; and $p$ represents the total number of points of the node in which the coordinate point n is located.

Thus, the target coordinate point may be obtained based on the above method, and the related information of the target coordinate point includes ($f(x)$, $f(y)$, and $f(z)$).

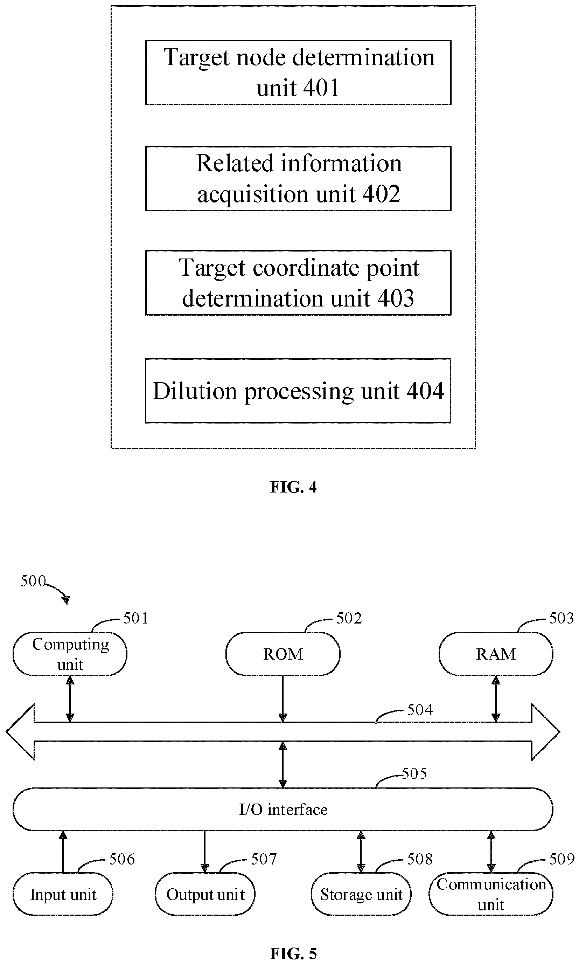

The scheme of the present disclosure further provides an apparatus for processing point cloud data. As shown in FIG. 4, the apparatus includes:

a target node determination unit 401 configured for acquiring a target node, located in a target layer, obtained after blocking processing is performed on coordinate points in the point cloud data, wherein the target node includes a plurality of coordinate points;

a related information acquisition unit 402 configured for acquiring related information of all the coordinate points of the target node;

a target coordinate point determination unit 403 configured for determining a target coordinate point based on the related information of the coordinate points of the target node and a total number of the coordinate points of the target node; and

a dilution processing unit 404 configured for replacing all the coordinate points of the target node with the target coordinate point, to realize dilution processing on the point cloud data.

In a specific example of the scheme of the present disclosure, the apparatus further includes:
a blocking processing unit configured for performing the blocking processing on the coordinate points in the point cloud data based on a preset blocking rule, to obtain a plurality of initial nodes in an initial layer; continuing to perform the blocking processing on coordinate points of at least one of the plurality of initial nodes, to obtain nodes in a next layer, and obtaining nodes in an i-th layer in a case where the blocking processing is performed repeatedly, wherein i is a positive integer greater than or equal to 1; and obtaining nodes in the last layer until a preset blocking termination condition is met.

In a specific example of the scheme of the present disclosure, the target layer is the last layer.

In a specific example of the scheme of the present disclosure, the apparatus further includes: a node number determination unit, wherein

the node number determination unit is configured for determining a first number of nodes, located in a next layer, required to be obtained after the blocking processing is performed on the nodes in the i-th layer; and

the blocking processing unit is further configured for performing the blocking processing on coordinate points of nodes in an (i-1)-th layer, to obtain the nodes in the i-th layer, a number of the nodes, in the i-th layer, obtained after the blocking processing is performed on the nodes in the (i-1)-th layer is equal to the first number.

In a specific example of the scheme of the present disclosure, the node number determination unit is further configured for acquiring a number of coordinate points of the nodes in the i-th layer, and acquiring a number of coordinate points of parent nodes of the nodes in the i-th layer; acquiring a second number of nodes, located in the next layer, required to be obtained after the blocking processing is performed on the parent nodes of the nodes in the i-th layer; and calculating the first number based on the number of the coordinate points of the nodes in the i-th layer, the number of the coordinate points of the parent nodes of the nodes in the i-th layer, and the second number.

In a specific example of the scheme of the present disclosure, the node number determination unit is further configured for obtaining a first characteristic value based on the number of the coordinate points of the nodes in the i-th layer and the number of the coordinate points of the parent nodes of the nodes in the i-th layer; and obtaining the first number based on the first characteristic value and the second number.

In a specific example of the scheme of the present disclosure, the target coordinate point determination unit is further configured for obtaining an average reflection intensity based on reflection intensities of all the coordinate points of the target node and the total number of the coordinate points of the target node; and determining target coordinate information based on coordinate information and the reflection intensities of all the coordinate points of the target node, the average reflection intensity, a preset maximum reflection intensity and a preset minimum reflection intensity, to obtain the target coordinate point.

In a specific example of the scheme of the present disclosure, the target coordinate point determination unit is further configured for obtaining a second characteristic value based on differences between the reflection intensities of the coordinate points of the target nodes and the preset minimum reflection intensity and a difference between the preset maximum reflection intensity and the preset minimum reflection intensity; obtaining a third characteristic value based on the average reflection intensity and the difference between the preset maximum reflection intensity and the preset minimum reflection intensity; and obtaining the target coordinate information based on the second characteristic value, the third characteristic value and the coordinate information of all the coordinate points of the target node.

The functions of each unit of the apparatus for processing point cloud data of the embodiment of the present disclosure may refer to corresponding descriptions of the above method, and will not be described in detail herein.

According to embodiments of the present disclosure, the present disclosure also provides an electronic device, a readable storage medium and a computer program product.

FIG. 5 shows a schematic block diagram of an example electronic device 500 that may be configured to implement embodiments of the present disclosure. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as a personal digital assistant, a cellular telephone, a smart phone, a wearable device, and other similar computing devices. The components shown herein, their connections and relationships, and their functions are by way of example only and are not intended to limit the implementations of the present disclosure described and/or claimed herein.

As shown in FIG. 5, the electronic device 500 includes a computing unit 501 that may perform various suitable actions and processes in accordance with computer programs stored in a read only memory (ROM) 502 or computer programs loaded from a storage unit 508 into a random access memory (RAM) 503. In the RAM 503, various programs and data required for the operation of the electronic device 500 may also be stored. The computing unit 501, the ROM 502 and the RAM 503 are connected to each other through a bus 504. An input/output (I/O) interface 505 is also connected to the bus 504.

A plurality of components in the electronic device 500 are connected to the I/O interface 505, including: an input unit 506, such as a keyboard, a mouse, etc.; an output unit 507, such as various types of displays, speakers, etc.; a storage unit 508, such as a magnetic disk, an optical disk, etc.; and a communication unit 509, such as a network card, a modem, a wireless communication transceiver, etc. The communication unit 509 allows the electronic device 500 to exchange information/data with other devices over a computer network, such as the Internet, and/or various telecommunications networks.

The computing unit 501 may be various general purpose and/or special purpose processing assemblies having processing and computing capabilities. Some examples of the computing unit 501 include, but are not limited to, a central processing unit (CPU), a graphics processing unit (GPU), various specialized artificial intelligence (AI) computing chips, various computing units running machine learning model algorithms, a digital signal processor (DSP), and any suitable processor, controller, microcontroller, etc. The computing unit 501 performs various methods and processes described above, such as the method for processing point cloud data. For example, in some embodiments, the method for processing point cloud data may be implemented as computer software programs that are physically contained in a machine-readable medium, such as the storage unit 508. In some embodiments, some or all of the computer programs may be loaded into and/or installed on the electronic device 500 via the ROM 502 and/or the communication unit 509. In a case where the computer programs are loaded into the RAM 503 and executed by the computing unit 501, one or more of steps of the above method for processing point cloud data may be performed. Alternatively, in other embodiments, the computing unit 501 may be configured to perform the method for processing point cloud data in any other suitable manner (e.g., by means of a firmware).

Various embodiments of the systems and techniques described herein above may be implemented in a digital electronic circuit system, an integrated circuit system, a field programmable gate array (FPGA), an application specific integrated circuit (ASIC), an application specific standard product (ASSP), a system on a chip (SOC), a load programmable logic device (CPLD), a computer hardware, a firmware, a software, and/or a combination thereof. These various implementations may include an implementation in one or more computer programs, which may be executed and/or interpreted on a programmable system including at least one programmable processor; the programmable processor may be a dedicated or general-purpose programmable processor and capable of receiving and transmitting data and instructions from and to a storage system, at least one input device, and at least one output device.

The program codes for implementing the methods of the present disclosure may be written in any combination of one or more programming languages. These program codes may be provided to a processor or controller of a general purpose computer, a special purpose computer, or other programmable data processing apparatus such that the program codes, when executed by the processor or controller, enable the functions/operations specified in the flowchart and/or the block diagram to be performed. The program codes may be executed entirely on a machine, partly on a machine, partly on a machine as a stand-alone software package and partly on a remote machine, or entirely on a remote machine or server.

In the context of the present disclosure, the machine-readable medium may be a tangible medium that may contain or store programs for using by or in connection with an instruction execution system, apparatus or device. The machine-readable medium may include a machine-readable signal medium or a machine-readable storage medium. The machine-readable medium may include, but is not limited to, an electronic, magnetic, optical, electromagnetic, infrared, or semiconductor system, apparatus or device, or any suitable combination thereof. More specific examples of the machine-readable storage medium may include one or more wire-based electrical connection, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination thereof.

In order to provide an interaction with a user, the system and technology described herein may be implemented on a computer having: a display device (e. g., a cathode ray tube (CRT) or a liquid crystal display (LCD) monitor) for displaying information to the user; and a keyboard and a pointing device (e. g., a mouse or a trackball), through which the user may provide an input to the computer. Other kinds of devices may also provide an interaction with the user. For example, a feedback provided to the user may be any form of sensory feedback (e.g., visual feedback, auditory feedback, or tactile feedback); and an input from the user may be received in any form, including an acoustic input, a voice input or a tactile input.

The systems and techniques described herein may be implemented in a computing system (e.g., as a data server) that may include a background component, or a computing system (e.g., an application server) that may include a middleware component, or a computing system (e.g., a user computer having a graphical user interface or a web browser through which a user may interact with embodiments of the systems and techniques described herein) that may include a front-end component, or a computing system that may include any combination of such background components, middleware components, or front-end components. The components of the system may be connected to each other through a digital data communication in any form or medium (e.g., a communication network). Examples of the communication network may include a local area network (LAN), a wide area network (WAN), and the Internet.

The computer system may include a client and a server. The client and the server are typically remote from each other and typically interact via the communication network. The relationship of the client and the server is generated by computer programs running on respective computers and having a client-server relationship with each other.

It should be understood that the steps may be reordered, added or deleted using the various flows illustrated above. For example, the steps described in the present disclosure may be performed concurrently, sequentially or in a different order, so long as the desired results of the technical solutions disclosed in the present disclosure may be achieved, and there is no limitation herein.

The above-described specific embodiments do not limit the scope of the present disclosure. It will be apparent to those skilled in the art that various modifications, combinations, sub-combinations and substitutions are possible, depending on design requirements and other factors. Any modifications, equivalent substitutions, and improvements within the spirit and principles of the present disclosure are intended to be included within the scope of the present disclosure.

**Claims**

1. A method for processing point cloud data, comprising:

   acquiring (S101) a target node, located in a target layer, obtained after blocking processing is performed on coordinate points in the point cloud data, wherein the target node comprises a plurality of coordinate points;
   acquiring (S102) related information of all the coordinate points of the target node;
   determining (S103) a target coordinate point based on the related information of the coordinate points of the target node and a total number of the coordinate points of the target node; and
   replacing (S104) all the coordinate points of the target node with the target coordinate point, to realize dilution processing on the point cloud data.

2. The method of claim 1, further comprising:

   performing the blocking processing on the coordinate points in the point cloud data based on a preset blocking rule, to obtain a plurality of initial nodes in an initial layer;
   continuing to perform the blocking processing on coordinate points of at least one of the plurality of initial nodes, to obtain nodes in a next layer, and obtaining nodes in an i-th layer in a case where the blocking processing is performed repeatedly, wherein i is a positive integer greater than or equal to 1; and
   obtaining nodes in the last layer until a preset blocking termination condition is met.

3. The method of claim 1 or 2, wherein the target layer is the last layer.

4. The method of claim 2 or 3, further comprising:

   determining a first number of nodes, located in a next layer, required to be obtained after the blocking processing is performed on the nodes in the i-th layer,
   wherein the obtaining the nodes in the i-th layer, comprises:
   performing the blocking processing on coordinate points of nodes in an (i-1)-th layer, to obtain the nodes in the i-th layer, wherein a number of the nodes, in the i-th layer, obtained after the blocking processing is performed on the nodes in the (i-1)-th layer is equal to the first number.

5. The method of claim 4, wherein the determining the first number of nodes, located in the next layer, required to be obtained after the blocking processing is performed on the nodes in the i-th layer, comprises:

acquiring a number of coordinate points of the nodes in the i-th layer, and acquiring a number of coordinate points of parent nodes of the nodes in the i-th layer;

acquiring a second number of nodes, located in the next layer, required to be obtained after the blocking processing is performed on the parent nodes of the nodes in the i-th layer; and

calculating the first number based on the number of the coordinate points of the nodes in the i-th layer, the number of the coordinate points of the parent nodes of the nodes in the i-th layer, and the second number, optionally, wherein the calculating the first number based on the number of the coordinate points of the nodes in the i-th layer, the number of the coordinate points of the parent nodes of the nodes in the i-th layer, and the second number, comprises:

obtaining a first characteristic value based on the number of the coordinate points of the nodes in the i-th layer and the number of the coordinate points of the parent nodes of the nodes in the i-th layer; and

obtaining the first number based on the first characteristic value and the second number.

6. The method of any one of claims 1 to 5, wherein the determining (S103) the target coordinate point based on the related information of the coordinate points of the target node and the total number of the coordinate points of the target node, comprises:

obtaining an average reflection intensity based on reflection intensities of all the coordinate points of the target node and the total number of the coordinate points of the target node; and

determining target coordinate information based on coordinate information and the reflection intensities of all the coordinate points of the target node, the average reflection intensity, a preset maximum reflection intensity and a preset minimum reflection intensity, to obtain the target coordinate point, optionally, wherein the determining the target coordinate information based on the coordinate information and the reflection intensities of all the coordinate points of the target node, the average reflection intensity, the preset maximum reflection intensity and the preset minimum reflection intensity, to obtain the target coordinate point, comprises:

obtaining a second characteristic value based on differences between the reflection intensities of the coordinate points of the target nodes and the preset minimum reflection intensity and a difference between the preset maximum reflection intensity and the preset minimum reflection intensity;

obtaining a third characteristic value based on the average reflection intensity and the difference between the preset maximum reflection intensity and the preset minimum reflection intensity; and

obtaining the target coordinate information based on the second characteristic value, the third characteristic value and the coordinate information of all the coordinate points of the target node.

7. An apparatus for processing point cloud data, comprising:

a target node determination unit (401) configured for acquiring a target node, located in a target layer, obtained after blocking processing is performed on coordinate points in the point cloud data, wherein the target node comprises a plurality of coordinate points;

a related information acquisition unit (402) configured for acquiring related information of all the coordinate points of the target node;

a target coordinate point determination unit (403) configured for determining a target coordinate point based on the related information of the coordinate points of the target node and a total number of the coordinate points of the target node; and

a dilution processing unit (404) configured for replacing all the coordinate points of the target node with the target coordinate point, to realize dilution processing on the point cloud data.

8. The apparatus of claim 7, further comprising:
a blocking processing unit configured for performing the blocking processing on the coordinate points in the point cloud data based on a preset blocking rule, to obtain a plurality of initial nodes in an initial layer; continuing to perform the blocking processing on coordinate points of at least one of the plurality of initial nodes, to obtain nodes in a next layer, and obtaining nodes in an i-th layer in a case where the blocking processing is performed repeatedly, wherein i is a positive integer greater than or equal to 1; and obtaining nodes in the last layer until a preset blocking termination condition is met.

9. The apparatus of claim 7 or 8, wherein the target layer is the last layer.

**10.** The apparatus of claim 7 or 8, further comprising: a node number determination unit, wherein,

the node number determination unit is configured for determining a first number of nodes, located in a next layer, required to be obtained after the blocking processing is performed on the nodes in the i-th layer; and the blocking processing unit is further configured for performing the blocking processing on coordinate points of nodes in an (i-1)-th layer, to obtain the nodes in the i-th layer, wherein a number of the nodes, in the i-th layer, obtained after the blocking processing is performed on the nodes in the (i-1)-th layer is equal to the first number.

**11.** The apparatus of claim 10, wherein the node number determination unit is further configured for acquiring a number of coordinate points of the nodes in the i-th layer, and acquiring a number of coordinate points of parent nodes of the nodes in the i-th layer; acquiring a second number of nodes, located in the next layer, required to be obtained after the blocking processing is performed on the parent nodes of the nodes in the i-th layer; and calculating the first number based on the number of the coordinate points of the nodes in the i-th layer, the number of the coordinate points of the parent nodes of the nodes in the i-th layer, and the second number.
optionally, wherein the node number determination unit is further configured for obtaining a first characteristic value based on the number of the coordinate points of the nodes in the i-th layer and the number of the coordinate points of the parent nodes of the nodes in the i-th layer; and obtaining the first number based on the first characteristic value and the second number.

**12.** The apparatus of any one of claims 7 to 11, wherein the target coordinate point determination unit (403) is further configured for obtaining an average reflection intensity based on reflection intensities of all the coordinate points of the target node and the total number of the coordinate points of the target node; and determining target coordinate information based on coordinate information and the reflection intensities of all the coordinate points of the target node, the average reflection intensity, a preset maximum reflection intensity and a preset minimum reflection intensity, to obtain the target coordinate point,
optionally, wherein the target coordinate point determination unit (403) is further configured for obtaining a second characteristic value based on differences between the reflection intensities of the coordinate points of the target nodes and the preset minimum reflection intensity and a difference between the preset maximum reflection intensity and the preset minimum reflection intensity; obtaining a third characteristic value based on the average reflection intensity and the difference between the preset maximum reflection intensity and the preset minimum reflection intensity; and obtaining the target coordinate information based on the second characteristic value, the third characteristic value and the coordinate information of all the coordinate points of the target node.

**13.** An electronic device, comprising:

at least one processor; and
a memory communicatively connected with the at least one processor,
wherein the memory stores instructions executable by the at least one processor, and the instructions, when executed by the at least one processor, enable the at least one processor to perform the method of any one of claims 1 to 6.

**14.** A non-transitory computer-readable storage medium storing computer instructions, wherein the computer instructions, when executed by a computer, cause the computer to perform the method of any one of claims 1 to 6.

**15.** A computer program product comprising a computer program, wherein the computer program, when executed by a processor, implements the method of any one of claims 1 to 6.

S101

acquiring a target node, located in a target layer, obtained after blocking
processing is performed on coordinate points in the point cloud data, wherein
the target node includes a plurality of coordinate points

S102

acquiring related information of all the coordinate points of the target node

S103

determining a target coordinate point based on the related information of the
coordinate points of the target node and a total number of the coordinate points
of the target node

S104

replacing all the coordinate points of the target node with the target coordinate
point, to realize dilution processing on the point cloud data

**FIG. 1**

**FIG. 2**

**FIG. 3**

Target node determination
unit 401

Related information
acquisition unit 402

Target coordinate point
determination unit 403

Dilution processing unit 404

**FIG. 4**

500

501 Computing unit

502 ROM

503 RAM

504

505 I/O interface

506 Input unit

507 Output unit

508 Storage unit

509 Communication unit

**FIG. 5**